# EUROPÄISCHE PATENTANMELDUNG

(11) **EP 3 982 468 A1**
(43) Veröffentlichungstag der Anmeldung: **13.04.2022**
(21) Anmeldenummer: 21201055.7
(22) Anmeldetag: 05.10.2021
(51) Int. Cl.: H01M 50/122, H01M 50/124, H01M 50/129, H01M 50/143

(54) **BATTERIEZELLE MIT EINEM ZELLVERBUND UND VERFAHREN ZU DEREN HERSTELLUNG**

(30) Priorität: 06.10.2020 DE 102020126088
(71) Anmelder: VOLKSWAGEN AG, 38440 Wolfsburg (DE)
(72) Erfinder: Meister, Paul, 38239 Salzgitter (DE); Bolli, Christoph, 38100 Braunschweig (DE); Qi, Xin, 48151 Münster (DE); Dagger, Tim, 49811 Lingen (DE)
(74) Vertreter: karo IP

(57) **Zusammenfassung**

Die vorliegende Erfindung betrifft eine Batteriezelle (1) mit einem Zellverbund (3), der wenigstens eine Anode (7), eine Kathode (6) und einen dazwischen angeordneten Separator (5) aufweist und von einer Hülle (14) umschlossen ist, wobei weiter eine Funktionsschicht (12) vorgesehen ist, welche den Zellverbund (3) zumindest teilweise umschließt und einen flammenhemmenden Stoff (13) umfasst.

## Beschreibung

Die vorliegende Erfindung betrifft eine Batteriezelle mit einem Zellverbund, der wenigstens eine Anode, eine Kathode und einen dazwischen angeordneten Separator aufweist und von einer Hülle umschlossen ist.

Aus dem Stand der Technik ist es bekannt, dass Batterien, wie insbesondere Lithium-Ionen-Batterien, wenigstens aus einer Batteriezelle oder einer Mehrzahl von Batteriezellen bestehen. Weiterhin weist eine Batteriezelle bevorzugt eine Vielzahl an einzelnen Schichten auf. Diese Schichten sind als Elektroden in Form von Kathoden sowie Anoden und dazwischen angeordneten Separatoren ausgebildet.

Bei der Herstellung der Batteriezelle können die Schichten beispielsweise zu Zellpaketen übereinandergestapelt oder durch Wicklungen zu Zellpaketen zusammengeführt werden.

Eine bei der elektrochemischen Speicherung von Energie bestehende Herausforderung, die beispielsweise mit den zuvor bereits genannten Lithium-Ionen-Zellen erfolgen kann, besteht darin, die Sicherheit der Batteriezellen während des Betriebes zu gewährleisten. Hierbei sind unterschiedliche Ereignisse bzw. Sicherheitsevents zu berücksichtigen, wie beispielsweise interne oder externe elektrische Kurzschlüsse, hohe Temperaturunterschiede aufgrund äußerer klimatischer Bedingungen und/oder hoher Leistungsanforderungen sowie auch bedingt durch mechanische Verformungen der Zelle. Letztere können beispielsweise in geringerer Form bei jedem Ladezyklus auftreten und in extremer Form bei Unfällen eines Fahrzeuges, wenn diese mit einer erheblichen Verformung der Fahrzeugstruktur einhergehen. Die genannten Faktoren können allesamt dazu führen, dass sich Batteriezellen entzünden, wodurch ein Feuer ausbrechen kann, dass sich im gesamten Batteriesystem ausbreiten kann.

Es können verschiedene Maßnahmen ergriffen werden, die auf unterschiedlichen Ebenen wirken. So ist es möglich, die innerhalb der Batteriezelle verwendeten Komponenten durch eine geeignete Wahl der Werkstoffe zu schützen. Diese Werkstoffe können zum Beispiel Separatoren mit speziellen Sicherheitsbeschichtungen oder Flammenschutzadditive darstellen, die dem Elektrolyten der Batteriezelle beigemischt sind. Andere Maßnahmen können umfassen, dass etwa über Peripheriegeräte, wie beispielsweise Batteriemanagementsysteme, Gefahrenmomente rechtzeitig erkannt und vermieden werden. Solche Batteriemanagementsysteme können etwa eine Überladung der Batteriezelle oder deren Aufheizung über eine bestimmte Grenztemperatur hinaus verhindern.

Die Maßnahmen sind aber in der Regel mit Einbußen bei der Leistung der Batteriezelle der gravimetrischen Energiedichte und/oder der volumetrischen Energiedichte verbunden. Die Maßnahmen sind zudem auch mit nicht unerheblichen Kosten verbunden, wodurch die Fertigungskosten für die Batteriesysteme deutlich ansteigen. So benötigen Peripheriegeräte, wie beispielsweise Batteriemanagementsysteme, zusätzlichen Bauraum, erhöhen zusätzlich das Gewicht des Batteriesystems, dass ohnehin bereits eine Mehrzahl von Batteriezellen umfasst. Dies geht zulasten der Energiedichte und erhöht in der Regel die Kosten und/oder das Gewicht des Batteriesystems. Zudem dienen solche Peripheriegeräte nur dazu, das Eintreten eines Gefahrenmoments zu verhindern, können aber bei dessen Eintritt nicht die Brennbarkeit der Batteriezellen reduzieren.

Aufgabe der vorliegenden Erfindung ist es daher, die sich aus dem Stand der Technik ergebenden Probleme zumindest teilweise zu lösen. Insbesondere soll eine Batteriezelle angegeben werden, die einen verbesserten Flammenschutz aufweist und gleichzeitig kostengünstig herstellbar ist.

Zur Lösung dieser Aufgaben trägt eine Batteriezelle mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Vorgeschlagen wird eine Batteriezelle mit einem Zellverbund, der wenigstens eine Anode, eine Kathode und einen dazwischen angeordneten Separator aufweist und von einer Hülle umschlossen ist. Die Batteriezelle weist weiterhin eine Funktionsschicht auf, welche den Zellverbund zumindest teilweise umschließt und einen flammenhemmenden Stoff umfasst. Der Zellverbund kann dabei beispielsweise als Zellwickel, als Zellstapel oder als Zellpaket ausgebildet sein. Bei einem Zellwickel sind dazu wenigstens drei Lagen, nämlich die Anode, die Kathode und ein Separator, zu einem Zellverbund aufgewickelt. Bei einem Zellstapel sind diese wenigstens drei Lagen übereinandergestapelt und bei einem Zellpaket zusätzlich noch miteinander verbunden.

Während die zuvor beschriebenen Lösungsansätze vorsehen, solche Bestandteile, die unmittelbar für die Funktion der Batteriezelle maßgeblich sind, mit einem Flammschutz auszustatten, wurde nunmehr erkannt, dass ein verbesserter Flammschutz durch solche (zusätzlichen) Komponenten erreicht werden kann, die nicht oder nur mittelbar für die Funktion der Batteriezelle maßgeblich sind.

So hat es sich gezeigt, dass ein Flammschutz in einer unmittelbar funktionsrelevanten Komponente, wie beispielsweise einem flüssigen Elektrolyten, den Separatoren und/oder den Aktivschichten von Kathoden und Anoden zu einer Verschlechterung der elektrischen Leistung bzw. einer Verschlechterung des Wirkungsgrades der Batteriezelle führen.

Hier ist demnach eine Funktionsschicht in der Batteriezelle vorgesehen ist, die mit einem Flammschutz ausgestattet ist. Diese Funktionsschicht beeinflusst dabei aber im Wesentlichen nicht die elektrische Leistung der Batteriezelle.

Die Ausstattung mit einem Flammenschutz sieht dabei vor, dass ein flammenhemmender Stoff in und/oder auf die Funktionsschicht(en) eingebracht bzw. aufgebracht wird. Hierdurch kann dann erreicht werden, dass die Umsetzungsfähigkeit der Funktionsschichten und damit auch der von ihr zumindest teilweise umschlossenen Batteriezelle erheblich reduziert wird. Umsetzungsfähigkeit bedeutet in diesem Zusammenhang insbesondere, dass die verwendeten Werkstoffe bei erhöhten Temperaturen Reaktionen mit anderen Stoffen wie insbesondere Sauerstoff eingehen. Dieser Vorgang der Umsetzung wird allgemein auch als Brennen bezeichnet.

Indem nun die Funktionsschichten und nicht eine der für die Funktion der Batteriezelle direkt erforderlichen Komponente mit einem Flammschutz ausgestattet ist, kann verhindert werden, dass die elektrische Leistung der Batteriezelle negativ beeinflusst wird. Die elektrische Leistung der Batteriezelle kann sich beispielsweise anhand der gespeicherten Ladungsmenge, dem maximalen Lade- bzw. Entladestrom und/oder den realisierbaren Lade-bzw. Entladezeiträumen sowie deren Lebensdauer bestimmen lassen.

Insbesondere ist es vorteilhaft, wenn die Hülle der Batteriezelle als Pouchfolie, Isolationstasche, beispielsweise zur Anwendung in einer prismatischen Zelle, oder als Tape ausgebildet ist. Zellverbunde wie beispielsweise Zellwickel, Zellstapel oder Zellpakete können besonders günstig und zuverlässig mit Pouchfolien oder Isolationstaschen dicht umschlossen sein. Gleiches ist auch für Ausführungsvarianten mit Klebebändern, den sogenannten Tapes, die die Außenseite der Zellverbunde umschließen und/oder abdecken können. Hierbei sind Pouchfolien und Isolationstaschen vorzugsweise in der Form vorgesehen, dass sie die Zellverbunde vollständig (insbesondere luftdicht) gegenüber der Umgebung abschließen. Bei der Verwendung von Tapes kann dies in der Weise erfolgen, dass diese nur einen Teil der Oberfläche eines Zellverbunds bedecken, hierbei jedoch als Verbindungsmittel wirken und die Zellwickel bzw. Zellstapel zu einem Zellverbund zusammenhalten. So können mit den Tapes beispielsweise die aus vielen Schichten bzw. Lagen bestehenden Zellverbund, wie Zellwickel oder Zellstapel, miteinander verbunden werden, bevor diese in Pouchfolien eingebracht werden.

Insbesondere kann dabei vorgesehen sein, dass die Funktionsschicht ein integraler Bestandteil der Hülle ist. Hierzu kann beispielsweise vorgesehen sein, dass die Pouchfolie und/oder die Isolationstaschen aus einem Werkstoff hergestellt sind, der bereits einen flammenhemmenden Stoff enthält. Hierbei kann der flammenhemmende Stoff im Werkstoff enthalten und/oder auf dessen Oberfläche aufgebracht sein. Dies gilt im Übrigen auch für die Verwendung von Tapes mit flammenhemmenden Stoffen. So kann beispielsweise ein Zellverbund zunächst mit einem flammenhemmenden Tape verbunden werden, bevor der so verbundene Zellverbund anschließend dicht mit einer Pouchfolie umschlossen wird. In diesem Fall bilden das Tape und die Pouchfolie zusammen die Hülle der Batteriezelle. Bei besonders einfachen Ausführungsformen kann es jedoch bereits ausreichend sein, lediglich eine (einzelne) der Funktionsschichten, also die Pouchfolie oder die Isolationstasche oder das Tape, mit einem flammenhemmenden Stoff auszurüsten.

Insbesondere kann vorgesehen sein, dass die Funktionsschicht mit einem Polymer gebildet ist und das Polymer mit dem flammenhemmenden Stoff dotiert ist. Für Pouchfolien oder Isolationstaschen verwendete Folien können einen mehrschichtigen Aufbau aufweisen. Hierbei kann beispielsweise vorgesehen sein, dass wenigstens eine dieser Schichten aus einem Polymer besteht bzw. ein solches umfasst, das mit einem flammenhemmenden Stoff dotiert ist. Es ist möglich, mehr als eine Schicht mit dem flammenhemmenden Stoff zu dotieren bzw. auszurüsten. Dotieren bedeutet in diesem Zusammenhang insbesondere, dass der flammenhemmende Stoff ein Gemisch mit dem Werkstoff, wie beispielsweise dem Polymer, eingeht. Eine Ausrüstung bedeutet in diesem Zusammenhang insbesondere, dass der flammenhemmende Stoff nach Art einer Oberflächenbeschichtung auf die Funktionsschichten aufgebracht ist.

Hierzu kann vorteilhafter Weise vorgesehen sein, dass die Funktionsschicht mit dem flammenhemmenden Stoff benetzt (z. B. überwiegend bedeckt) oder (vollflächig) beschichtet ist.

Insbesondere kann vorgesehen werden, dass das Polymer wenigstens einen Stoff aus der Gruppe von Polyethylen (PE), Polypropylen (PP), Polyimid, Teflon oder Polyethylenterephtalat (PET) umfasst. Diese Polymerstoffe sind günstig verfügbar und können besonders gut mit flammenhemmenden Stoffen dotiert bzw. ausgerüstet werden. Ausrüsten bedeutet in diesem Zusammenhang, dass die Funktionsschicht mit dem flammenhemmenden Stoff benetzt oder beschichtet ist.

Insbesondere kann vorgesehen sein, dass die Hülle mehrschichtig aufgebaut ist und die Funktionsschicht wenigstens eine Innenschicht oder eine Außenschicht der Hülle bildet. Je nach Bedarf können somit auch Hüllen mit zwei und mehr Schichten zum Einsatz kommen. Möglich sind dreischichtige Hüllen, die eine (zentrale bzw. mittige) Metallschicht aufweisen, welche an der Innenseite und der Außenseite jeweils von einer Polymerschicht bedeckt ist.

Insbesondere kann vorgesehen sein, dass der flammenhemmende Stoff wenigstens einen Stoff aus der Gruppe von anorganischen Stoffen, wie Aluminiumhydroxid, Magnesiumhydroxid, Mg₃Ca(CO₃)₄, von halogenhaltigen Stoffen, wie Chlorparaffine, von phosphorhaltigen Stoffen, wie Phosphite, Phosphate, Phosphonate, Phosphazene oder Melamin oder melaminähnliche Substanzen umfasst. Diese Stoffe haben besonders gute flammenhemmende Eigenschaften und können im Rahmen des Herstellungsverfahrens gut und bei relativ niedrigen Kosten verarbeitet werden.

Insbesondere profitiert im Weiteren ein (Kraft)Fahrzeug von der hier vorgeschlagenen Lösung, wenn dieses mit wenigstens einer Batteriezelle ausgestattet ist, die von zumindest einer Hülle umschlossen ist, welche gemäß der vorliegenden Lösung ausgebildet ist. Das Fahrzeug verfügt damit über eine Lösung für ein Batteriesystem, die im Wesentlichen keinerlei negative Einflüsse auf die Leistung der Batteriezelle erfährt, gleichzeitig aber einen hohen Flammenschutz aufweist, der den Fahrer und das Fahrzeug im Falle eines Funktionsversagens schützt. Ein solches Funktionsversagen kann beispielsweise bei einem Unfall mit einer Verformung der Fahrzeugstruktur oder aber einer Überhitzung der benachbarten Batteriezelle auftreten.

Schließlich kann als Herstellungsverfahren vorgesehen werden, dass wenigstens eine Funktionsschicht mit einem flammenhemmenden Stoff an einer Außenseite des Zellverbunds angeordnet wird.

Die Erläuterungen zur Vorrichtung können auch zur Charakterisierung des Herstellungsverfahrens herangezogen werden, und umgekehrt.

Weiter wird noch die Verwendung eines Polymers umfassend
- wenigstens einen Stoff aus der Gruppe von Polyethylen (PE), Polypropylen (PP), Polyimid, Teflon oder Polyethylenterephtalat (PET) und/oder
- wenigstens einen Stoff aus der Gruppe von
   - anorganischen Stoffen, wie Aluminiumhydroxid, Magnesiumhydroxid, Mg₃Ca(CO₃)₄,
   - von halogenhaltigen Stoffen, wie Chlorparaffine,
   - von phosphorhaltigen Stoffen, wie Phosphite, Phosphate, Phosphonate, Phosphazene
   - oder Melamin oder melaminähnliche Substanzen
in einer Hülle einer Batteriezelle zur Verbesserung des Flammschutzes der Batteriezelle vorgeschlagen.

Die Erläuterungen zur Vorrichtung können auch zur Charakterisierung der Verwendung herangezogen werden, und umgekehrt.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig.1:: eine Schrägansicht einer Pouchzelle mit dem schematischen Aufbau der Pouchzelle;
- Fig. 2:: eine Schrägansicht auf einen Zellwickel mit Tape und eine Isolationstasche;
- Fig. 3:: eine Schrägansicht auf einen Zellverbund und einen Zellwickel jeweils mit Tape;
- Fig. 4:: eine Schrägansicht einer Pouchzelle mit einer zweiten Ausführungsform eines schematischen Aufbaus der Pouchfolie;
- Fig. 5:: eine Schrägansicht einer Pouchzelle mit einer dritten Ausführungsform eines schematischen Aufbaus der Pouchfolie; und
- Fig. 6:: ein Kraftfahrzeug mit flammgeschützten Batteriezellen.

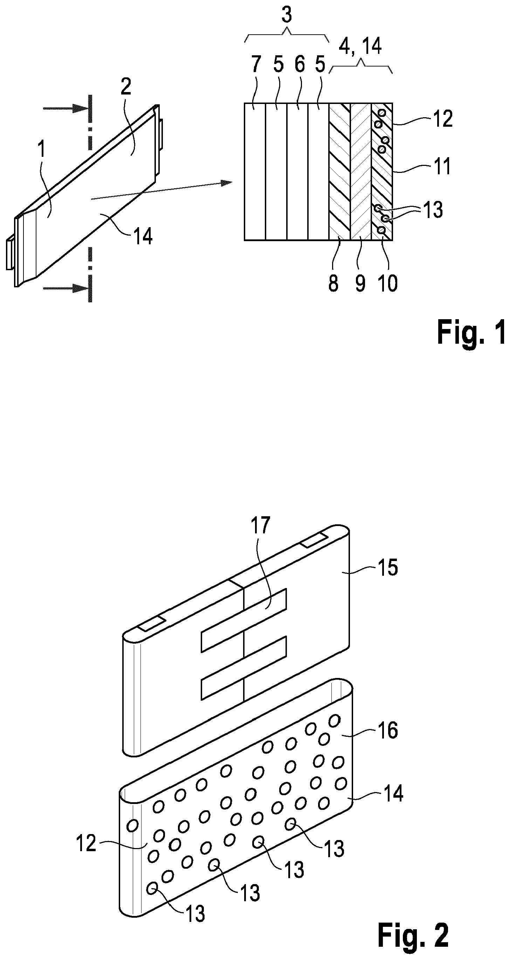

In Fig. 1 ist im linken Bereich eine Batteriezelle 1 in einer Schrägansicht dargestellt. Die Batteriezelle 1 ist dabei als sogenannte Pouchzelle 2 ausgebildet. Dies bedeutet, dass ein Zellverbund 3 von einer Pouchfolie 4 dicht umschlossen ist. Der Zellverbund 3 ist mehrschichtig aufgebaut und weist abwechselnd angeordnete Lagen von Separatoren 5, Kathoden 6 und Anoden 7 auf. Die Pouchfolie 4 ihrerseits weist bei der dargestellten Ausführungsform einen dreischichtigen Aufbau auf. Eine innenliegende erste Schicht 8 ist dabei aus einem Polymer gefertigt, bei dem es sich um beispielsweise Polypropylen handelt. Eine zweite Schicht 9 ist eine metallische Schicht für die Aluminium oder eine Legierung daraus verwendet werden kann. Eine dritte Schicht 10 der Pouchfolie 4 bildet eine Außenseite 11 der Pouchfolie 4 und gleichzeitig eine Funktionsschicht 12. Die Funktionsschicht 12 bildet dabei einen verbesserten Flammenschutz aus und umfasst dazu einen flammenhemmenden Stoff 13. Im fertig montierten Zustand bildet die aus einen oder mehreren Teilen bestehende Pouchfolie 4 eine Hülle 14, die den Zellverbund 3 dicht umschließt. Als Werkstoff für die dritte Schicht 10 wird vorwiegend beispielsweise Polyethylenterephtalat (PET) verwendet.

Als flammenhemmendender Stoff 13 können beispielsweise anorganische Verbindungen, wie etwa Aluminiumhydroxid, Magnesiumhydroxid, Mg₃Ca(CO₃)₄ oder halogenhaltige Stoffe, wie zum Beispiel Chlorparaffine verwendet werden. Weiterhin können als flammenhemmender Stoff auch Verbindungen, wie Phosphite, Phosphate, Phosphonate, Phosphazene oder Melamin oder melaminähnliche Substanzen verwendet werden.

Mögliche Polymere für den Schichtaufbau der Hülle 14 bzw. der Pouchfolie 4 sind neben dem gezeigten Polypropylen (PP) und Polyethylenterephtalat (PET) beispielsweise auch Polyethylen (PE), Polyimid oder auch Teflon. Bei der dargestellten Ausführungsform ist der flammenhemmenden Stoff 13 in den Werkstoff der dritten Schicht 10 eingebracht. D. h. das dort verwendete Polymer ist mit dem flammenhemmenden Werkstoff 13 dotiert bzw. vermischt. Hierzu ist anzumerken, dass nicht nur ein flammenhemmender Werkstoff 13 verwendet werden kann. Vielmehr ist es auch möglich, Mischungen aus unterschiedlichen flammenhemmenden Werkstoffen 13 im Rahmen der vorliegenden Erfindung zu verwenden.

Die Fig. 2 zeigt in einer Schrägansicht im oberen Bereich einen Zellwickel 15 sowie eine darunter angeordnete Isolationstasche 16. Der Zellwickel 15 wird von zwei Tapes 17 in dem dargestellten Zustand zusammengehalten. Der Zellwickel 15 ist dazu bestimmt, in die Isolationstasche 16 eingesetzt zu werden. Die Isolationstasche 16 bildet bei dieser Ausführungsform gleichzeitig die Funktionsschicht 12 und die Hülle 14 des Zellverbunds. Bei einer prismatischen Batteriezelle wird diese dann beispielsweise noch von einer Aluminium-Can umschlossen. Durch das Einbringen des flammenhemmenden Stoffs 13 in den für die Isolationstasche 16 verwendeten Werkstoff kann diese den Flammschutz erheblich verbessern, indem sie als flammenhemmende Funktionsschicht 12 wirkt.

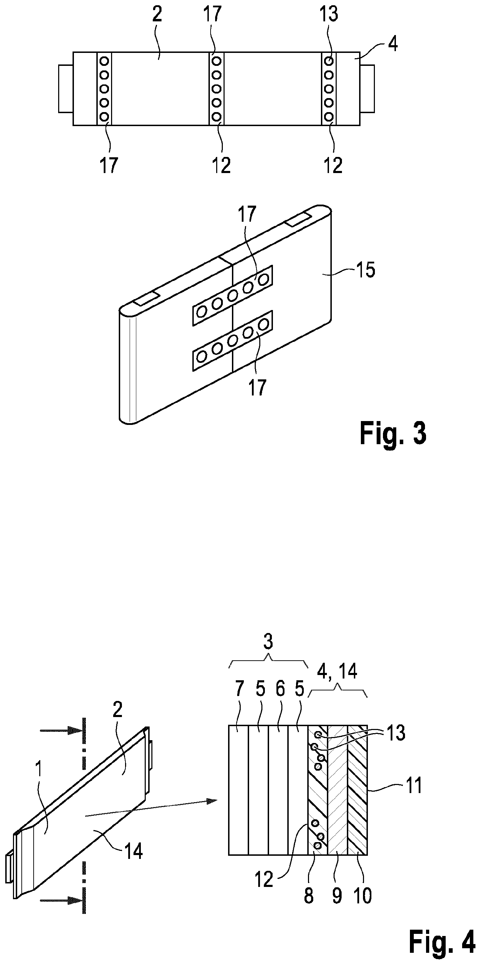

In Fig. 3 sind eine Pouchzelle 2 und ein Zellwickel 15 in einer Schrägansicht dargestellt. Die Besonderheit bei dieser Ausführungsform ist, dass sowohl die Pouchzelle 2 als auch der Zellwickel 15 von Tapes 17 zusammengehalten werden, die ihrerseits als Funktionsschicht 12 wirken. Dazu ist der für die Tapes 17 verwendete Werkstoff bereits mit einem flammenhemmenden Stoff 13 dotiert oder ausgerüstet. An dieser Stelle ist anzumerken, dass neben einer Dotierung, d. h. Vermischung des Werkstoffs mit einem flammenhemmenden Stoff 13 alternativ auch die Möglichkeit besteht, den flammenhemmenden Stoff 13 zusätzlich oder ausschließlich auf die Oberfläche der in den Figuren 1 und 2 gezeigten Hüllen 14 aufzubringen. Dies bedeutet, dass auch die Oberflächen der Pouchfolie 4, der Isolationstasche 16 und der Tapes 17 mit dem flammenhemmenden Stoff 13 ausgerüstet sein können.

In Fig. 4 ist eine Pouchzelle 2 dargestellt, die prinzipiell einen Aufbau aufweist, der mit dem Aufbau der Pouchzelle 2 gemäß Fig. 1 weitestgehend identisch ist. In Abweichung zu der in Figur 1 dargestellten Ausführungsform ist bei der Ausführungsform gemäß Fig. 4 nun jedoch die innenliegende erste Schicht 8 als Funktionsschicht 12 ausgebildet. Hierzu ist der Werkstoff der ersten Schicht 8 mit dem flammenhemmenden Stoff 13 dotiert.

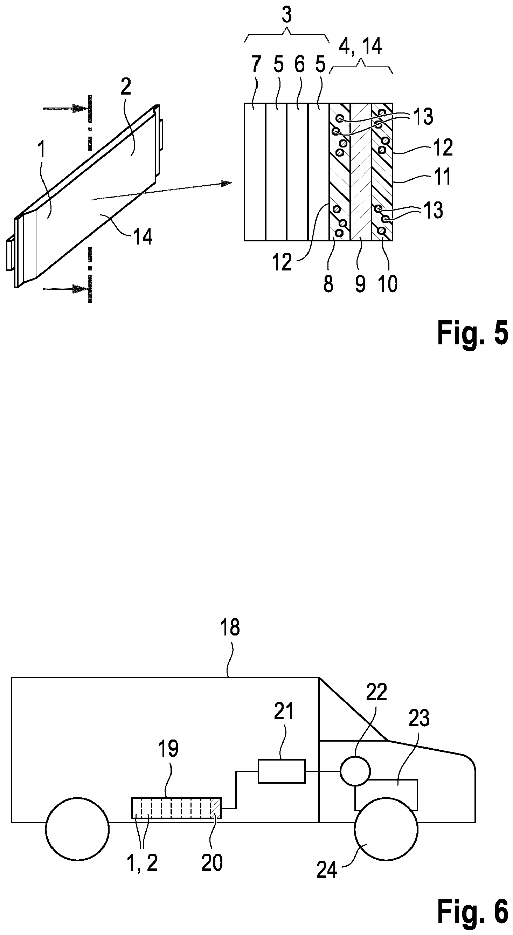

In Fig. 5 ist eine weitere mögliche Ausführungsform der Erfindung dargestellt, bei der nun sowohl die erste Schicht 8 als auch die dritte Schicht 10 der Pouchfolie 4 als Funktionsschicht 12 ausgebildet sind. Hierzu sind beide Funktionsschichten 12 mit wenigstens einer Art von flammenhemmenden Stoff 13 dotiert oder ausgerüstet. Im Rahmen der vorliegenden Erfindung kann der flammenhemmende Stoff 13 somit wahlweise in oder auf einer oder mehreren Schichten bzw. Abschnitten der Hülle 14 vorgesehen werden, um den Flammschutz der auf diese Weise hergestellten Batteriezelle 1 zu verbessern.

Mit der vorliegenden Erfindung ist es somit möglich, die Brennbarkeit der elektrochemisch aktiven Komponenten von Batteriezellen 1 deutlich zu senken. Dies hat den Vorteil, dass das Eintreten von Brandereignissen, also eines sogenannten Sicherheitsevents, effektiv und dauerhaft unterbunden werden kann. Ein weiterer Vorteil der vorliegenden Erfindung besteht aber auch darin, dass beim Auftreten eines solchen Sicherheitsevents, d. h. während eines Brands die Auswirkungen dieses Brands erheblich vermindert werden kann und eine Weiterverbreitung des Brands, die sogenannte Propagation deutlich gehemmt werden kann. Im Extremfall können somit auftretende Brandereignisse verhindert oder aber zumindest in ihren Folgewirkungen erheblich verringert werden. Ein hiermit ausgestattetes Fahrzeug verschafft damit den im Falle eines Sicherheitsevents darin befindlichen Passagieren deutlich mehr Zeit zum Verlassen des Fahrzeuges.

In Fig. 6 ist ein Fahrzeug 18 in einer schematischen Seitenansicht dargestellt. Das Fahrzeug 18 ist mit einem Batteriesystem 19 ausgestattet, dass eine Vielzahl von Batteriezellen 1 aufweist, die als Pouchzellen 2 ausgebildet sind. Das Batteriesystem 19 weist ferner ein Batteriemanagementsystem 20 auf, welches die Funktion der Batteriezellen 1 im laufenden Betrieb überwacht und steuert. Für den Betrieb des Fahrzeugs 18 liefert eine Steuerung 21 Energie an einen Elektromotor 22, der seinerseits Antriebskräfte erzeugt, die über ein Getriebe 23 als Antriebskräfte an Räder 24 weitergeleitet werden. Hierdurch ist ein vollelektrischer Fahrbetrieb des Fahrzeugs 18 möglich, wobei durch die vorliegende Erfindung ein deutlich verbesserter Flammenschutz des Batteriesystems 19 und damit des Fahrzeugs 18 erreicht wird.

Während die Erfindung im Zusammenhang mit Tapes 17, Pouchzellen 2 und Zellwickeln 15, beispielsweise in Form von prismatischen Zellen, beschrieben worden ist, kann das Konzept jedoch auch genauso gut im Zusammenhang mit anderen Bauformen von Batteriezellen 1, wie beispielsweise zylindrischen Batteriezellen 1, angewendet werden.

### Bezugszeichenliste

- 1: Batteriezelle
- 2: Pouchzellen
- 3: Zellverbund
- 4: Pouchfolie
- 5: Separator
- 6: Kathode
- 7: Anode
- 8: erste Schicht
- 9: zweite Schicht
- 10: dritte Schicht
- 11: Außenseite
- 12: Funktionsschicht
- 13: flammenhemmender Stoff
- 14: Hülle
- 15: Zellwickel
- 16: Isolationstasche
- 17: Tape
- 18: Fahrzeug
- 19: Batteriesystem
- 20: Batteriemanagementsystem
- 21: Steuerung
- 22: Elektromotor
- 23: Getriebe
- 24: Rad

## Patentansprüche

1. Batteriezelle (1) mit einem Zellverbund (3), der wenigstens eine Anode (7), eine Kathode (6) und einen dazwischen angeordneten Separator (5) aufweist und von einer Hülle (14) umschlossen ist,
wobei weiter eine Funktionsschicht (12) vorgesehen ist, welche den Zellverbund (3) zumindest teilweise umschließt und einen flammenhemmenden Stoff (13) umfasst.

2. Batteriezelle (1) nach dem vorhergehenden Anspruch, **dadurch gekennzeichnet, dass** die Hülle (14) als Pouchfolie (4), Isolationstasche (16) oder Tape (17) ausgebildet ist.

3. Batteriezelle (1) nach einem der vorhergehenden Ansprüche, **dadurch gekennzeichnet, dass** die Funktionsschicht (12) ein integraler Bestandteil der Hülle (14) ist.

4. Batteriezelle (1) nach einem der vorhergehenden Ansprüche, **dadurch gekennzeichnet, dass** die Funktionsschicht (12) mit einem Polymer gebildet ist und das Polymer mit dem flammenhemmenden Stoff (13) dotiert ist.

5. Batteriezelle (1) nach einem der vorhergehenden Ansprüche, **dadurch gekennzeichnet, dass** die Funktionsschicht (12) mit dem flammenhemmenden Stoff (13) benetzt oder beschichtet ist.

6. Batteriezelle (1) nach einem der vorhergehenden Ansprüche, **dadurch gekennzeichnet, dass** das Polymer wenigstens einen Stoff aus der Gruppe von Polyethylen (PE), Polypropylen (PP), Polyimid, Teflon oder Polyethylenterephtalat (PET) umfasst.

7. Batteriezelle (1) nach einem der vorhergehenden Ansprüche, **dadurch gekennzeichnet, dass** die Hülle (14) mehrschichtig aufgebaut ist und die Funktionsschicht (12) wenigstens eine innen liegende erste Schicht (8) oder eine außen liegende dritte Schicht (10) der Hülle (14) bildet.

8. Batteriezelle (1) nach einem der vorhergehenden Ansprüche, **dadurch gekennzeichnet, dass** der flammenhemmende Stoff (13) wenigstens einen Stoff aus der Gruppe von
- anorganischen Stoffen, wie Aluminiumhydroxid, Magnesiumhydroxid, Mg₃Ca(CO₃)₄,
- von halogenhaltigen Stoffen, wie Chlorparaffine,
- von phosphorhaltigen Stoffen, wie Phosphite, Phosphate, Phosphonate, Phosphazene
- oder Melamin oder melaminähnliche Substanzen
umfasst.

9. Fahrzeug (18) mit wenigstens einer Batteriezelle (1) nach einem der vorhergehenden Patentansprüche.

10. Verfahren zur Herstellung einer Batteriezelle (1) nach Anspruch 1, wobei wenigstens eine Funktionsschicht (12) mit einem flammenhemmenden Stoff (13) an einer Außenseite (11) des Zellverbunds (3) angeordnet wird.
